# EUROPEAN PATENT APPLICATION

(11) **EP 2 209 093 A1**
(43) Date of publication of application: **21.07.2010**
(21) Application number: 08792009.6
(22) Date of filing: 31.07.2008
(51) Int. Cl.: G06T 15/60, A63F 13/00

(54) **IMAGE GENERATING DEVICE, IMAGE GENERATING METHOD, INFORMATION RECORDING MEDIUM, AND PROGRAM**

(30) Priority: 28.09.2007 JP 2007253714
(71) Applicant: Konami Digital Entertainment Co., Ltd., Tokyo 107-8324 (JP)
(72) Inventor: ASAMI, Yuichi, Tokyo 107-8324 (JP)
(74) Representative: Rüger, Barthelt & Abel Patentanwälte
(86) International application number: PCT/JP2008/063794
(87) International publication number: WO 2009/041156

(57) **Abstract**

A storage unit (201) stores: character object information (251) showing a position at which a character object is located and the shape of a character object; surface object information showing a position at which a surface object is located and the shape of the surface object; and light source information (253) showing a position at which a light source is located. A calculating unit (202) calculates a shade of the character object, which is projected onto the surface object by the light source, based on the character object information (251), the plane object information (252), and the light source information (253). When a determining unit (203) determines that the character object and the surface object are in contact with each other, a changing unit (204) changes the brightness of the shade in accordance with the distance between the character object and the surface object. A generating unit (205) generates images showing the character object, the plane object, and the shade.

## Description

### Technical Field

The present invention relates to an image generating apparatus, a method for generating images, information recording medium, and program that arc preferable for clearly representing the positional relationship between objects in a virtual space.

### Background Art

There is a known method for representing, in a virtual space, the shadow of an object projected by a light emitted from a light source. For example, Patent Literature 1 discloses a gaming apparatus that can represent a shadow without increasing the data volume. To achieve this, the gaming apparatus changes the number of polygons for representing the shadow of a character object based on the distance between the positions of the character object and a virtual camera and changes the degree of transparency of polygons according to the position of the light source.
Patent Literature 1: Japanese Patent No. 3926828

### Disclosure of the Invention

### Problem to be Solved by the Invention

In the foregoing gaming apparatus, the shadow appearance changes as the posture of the character object changes, whereby realistic images can be generated and displayed. However, when the character object makes a quick move, the positional relationship between objects cannot be easily seen. For example, to represent a situation where a virtual dancer takes dance steps, the user could not easily determine whether the dancer's foot is on the ground when the dancer repeatedly sets his/her foot on the floor and take the foot off from the floor. The move the dancer is making could not be seen well. This problem was not limited to the dance game situation. When representing a virtual three-dimensional space with a large depth, for example, the image of an object itself was an obstacle. From the position of a virtual camera viewpoint, which is the actual viewpoint, it was difficult to see the relative positional relationship between objects - i.e., weather the objects are in contact with each other or how close they are to each other.

The present invention has been made to solve the foregoing problem. The present invention is directed to providing an image generating apparatus, a method for generating images, information recording medium, and program that arc preferable for clearly representing the positional relationship between objects in a virtual space.

### Means for Solving the Problem

To achieve the foregoing object, the following invention is disclosed according to the principle of the present invention.

An image generating apparatus according to a first aspect of the present invention comprises: a storage unit, a shade calculating unit, a distance calculating unit, a changing unit, and a generating unit.
The storage unit stores the position of a character object, the position of a plane object, and the position of a light source in a virtual space.
The shade calculating unit calculates the shade of the character object projected onto the plane object by the light source.
The distance calculating unit calculates the distance between the character object and the plane object.
The changing unit changes the calculated shade according to the calculated distance between the character object and the plane object.
The generating unit generates an image by drawing the character object, the plane object, and the shade thus changed.

According to the present invention, the shade of a character object contained in a generated image changes based on the distance between the character object and a plane object. By looking at the change to the shade of the target object, the user can easily determine the positional relationship between the target object and another object - i.e., how far the target object is separated from the other object (how close these objects are to each other). A sense of distance in a virtual space can be easily gained.
For example, an object representing a dancer taking steps is a character object. Also, the floor on which the dancer object is standing is a plane object, and lighting equipment is a light source. When the dancer object jumps, the changing unit changes the shade of the dancer object, which is produced by a light, according to the jump height. The user can easily see how high the dancer object jumped by looking at the change to the shade. For example, the shade can be calculated by performing precise light source calculation. However, calculation may be performed for an approximate region where the shade is expected to appear (shaded region), so that the calculated shaded region may be regarded as a shade.

The storage unit may further store the shape of the character object and the shape of the plane object.
The image generating apparatus may further comprises a determining unit which determines, based on the stored position and shape of the character object as well as on the stored position and shape of the plane object, whether the character object is separated from the plane object by more than a predetermined distance.
The changing unit may change, upon determination by the determining unit that the character object is separated from the plane object by more than the predetermined distance, changes the calculated shade according to the calculated distance between the character object and the plane object.

According to the present invention, when the character object and the plane object approaches each other to an extent where the distance therebetween is a predetermined distance, the shade of the character object changes. Upon occurrence of a change to the target object, the user can easily see that the target object has approached another object to an extent where the distance therebetween is the predetermined distance. The positional relationship between objects can be easily gained.
For example, when the dancer object raises a foot to a height higher than a certain height, the image generating apparatus changes the shade of the dancer object, which is produced by a light, according to the height of the raised foot. By looking at the change to the shade, the user can easily see how high the foot was raised by the dancer object.

The determining unit may determine that the character object is not in contact with the plane object when the character object is separated from the plane object by more than the predetermined distance. Otherwise, the determining unit may determine that the character object is in contact with the plane object.
The changing unit may change the calculated shade according to the calculated distance between the character object and the plane object upon determination by the determining unit that the character object is not in contact with the plane object.

According to the present invention, the shade of the character object changes unless the character object and the plane object are in contact with each other. Upon occurrence of a change to the target object, the user sees that the target object has contacted another object. The positional relationship between the objects can be easily gained.
For example, as a foot of the dancer object is separated from the floor even by a minimal distance, the image generating apparatus changes the shade of the dancer object, which is produced by a light, according to the separated distance. By looking at the change to the shade, the user can easily see whether the foot of the dancer object is in contact with the floor. Also, it is easy to see how far above the floor the foot of the dancer object is.

The determining unit may determine whether the character object and the plane object are in contact with each other based on whether a predetermined region on the surface of the character object is in contact with the plane object.
Also, the changing unit may regard the distance between the predetermined region and the plane object as the distance between the character object and the plane object.

According to the present invention, unless a specific portion of the surface of the character object is in contact with the plane object, the shade of the character object changes. By looking at the shade of the target object, the user can easily see that the specific potion has contacted another object. The positional relationship between objects can be easily understood.
For example, the sole (shoe bottom) of the dancer object is a specific portion. The changing unit changes the shadow of the dancer object when the sole is not in contact with the floor. By looking at the change to the shade, the user can easily see whether the entire sole (shoe bottom) of the dancer object is in contact with the floor.

The changing unit may change at least one of the hue, saturation, and brightness of the calculated shade.

According to the present invention, for example, the hue, saturation, and brightness of the shade of the character object changes based on the distance between the character object and the plane object. By looking at the change in the hue, saturation, or brightness of the target object, the user can easily determine the positional relationship between the target object and another object - i.e., how far they are separated from each other (how close they are to each other). A sense of distance in a virtual space can be easily gained.

The image generating apparatus may further comprise a playing unit which plays music.
Also, the changing unit may change the calculated shade according to at least one of the type, tempo, tune, melody, rhythm, and beat of the music played by the playing unit.

According to the present invention, for example, in a game where the user dances to music or plays an instrument, how to change the shade can be arranged according to played songs.

The changing unit may change the calculated shade according to a score gained by a player in a game executed by the image generating apparatus.

According to the present invention, for example, the image generating apparatus more greatly changes the shade of the character object as the score acquired by the player during the game increases (decreases). By looking at the amount of change to the shade, the player can quickly confirm whether his/her score is high or low.

The changing unit may monotonously increase the brightness of a portion of the calculated shade corresponding to the predetermined region with respect to the distance between the plane object and the predetermined region.

According to the present invention, by looking at the amount of change to the shade of the character object, the user can easily see how far the objects are separated from each other or whether they are in contact with each other based on the amount of change.
For example, as the distance between a foot of the dancer object and the floor increases, the brightness of the shadow of the dancer object increases. By looking how bright the shade is, the user can easily see how far the foot is separated from the floor.

The changing unit may monotonously decrease the brightness of a portion of the calculated shade corresponding to the predetermined region with respect to the distance between the plane object and the predetermined region.

According to the present invention, by looking at the amount of change to the shade of the character object, the user can easily see how far the objects are separated from each other or whether they are in contact with each other.
For example, as the distance between a foot of the dancer object and the floor decreases, the shadow of the dancer object turns brighter. By looking at the brightness of the shadow, the user can easily see how far the foot is separated from the floor.

An image generating method according to another aspect of the present invention, which is performed by an image generating apparatus comprising a storage unit, comprises a shade calculating step, a distance calculating step, a changing step, and a generating step.
The position of a character object, the position of a plane object, and the position of a light source in a virtual space arc stored in the storage unit.
In the shade calculating step, the shade of the character object projected onto the plane object by the light source is calculated.
In the distance calculating step, the distance between the character object and the plane object is calculated.
In the changing step, the calculated shade is changed based on the calculated distance between the character object and the plane object.
In the generating step, an image is generated by drawing the character object, the plane object, and the changed shade.

According to the present invention, the image generating apparatus that uses this image generating method changes the shade of the character object contained in the generated image based on the distance between the character object and the plane object. By looking at the change to the shade of the target object, the user can easily determines the positional relationship between the target object and another object - i.e., how far they are separated from each other, how close they arc to each other, etc. A sense of distance in a virtual space can be easily gained.

An information recording medium according to another aspect of the present invention causes a computer to act as: a storage unit, a shade calculating unit, a distance calculating unit, a changing unit, and a generating unit.
The storage unit stores the position of a character object, the position of a plane object, and the position of a light source in a virtual space.
The shade calculating unit calculates the shade of the character object projected onto the plane object by the light source.
The distance calculating unit calculates the distance between the character object and the plane object.
The changing unit changes the calculated shade according to the calculated distance between the character object and the plane object.
The generating unit generates an image by drawing the character object, the plane object, and the shade thus changed.

According to the present invention, the computer changes the hue, saturation, and brightness of the shade of the character object contained in the generated image based on the distance between the character object and the plane object. By looking at the shade of the target object, the user can easily determine the positional relationship between the target object and another object - i.e., how far they are separated from each other, how close they are to each other, etc. A sense of distance in a virtual space can be easily gained.

A program according to another aspect of the present invention causes a computer to act as: a storage unit, a shade calculating unit, a distance calculating unit, a changing unit, and a generating unit.
The storage unit stores the position of a character object, the position of a plane object, and the position of a light source in a virtual space.
The shade calculating unit calculates the shade of the character object projected onto the plane object by the light source.
The distance calculating unit calculates the distance between the character object and the plane object.
The changing unit changes the calculated shade according to the calculated distance between the character object and the plane object.
The generating unit generates an image by drawing the character object, the plane object, and the shade thus changed.

According to the present invention, the computer changes the hue, saturation, and brightness of the shade of the character object contained in the generated image based on the distance between the character object and the plane object. By looking at the change to the shade of the target object, the user can easily determine the positional relationship between the target object and another object - i.e., how far they are separated from each other, how close they are to each other, etc. A sense of distance in a virtual space can be easily gained.

The program according to the present invention can be stored in a computer-readable information recording medium, such as a compact disk, a flexible disk, a hard disk, a magnetic optical disk, a digital video disk, a magnetic tape, or a semiconductor memory.
The foregoing program can be distributed and sold via a computer communication network, separately from a computer in which the program is to be executed. As well, the foregoing information recording medium can be distributed and sold, separately from a computer.

### Effect of the Invention

According to the present invention, the positional relationship between objects in a virtual space can be clearly represented.

### Brief Description of Drawings

FIG. 1 is a diagram illustrating a general configuration of a typical information processing apparatus achieving an image generating apparatus according to this embodiment.
FIG. 2 is a diagram for explaining a functional configuration of an image generating apparatus.
FIG. 3 is a diagram for explaining a shadow of a character object on a plane object, which is produced by a light from a light source.
FIG. 4A is a diagram illustrating an example shaded area when a character object is in contact with a plane object.
FIG. 4B is a diagram illustrating an example shaded area when a character object is not in contact with a plane object.
FIG. 5A is a diagram for explaining a predetermined region and a shade thereon.
FIG. 5B is a diagram for explaining a relationship between a point P1 on a predetermined region and a point Q1 on a plane object.
FIG. 6A is a diagram illustrating an example relationship between the distance from a predetermined region to a plane object and the brightness of a shaded area.
FIG. 6B is a diagram illustrating another example relationship between the distance from a predetermined region to a plane object and the brightness of a shaded area.
FIG. 6C is a diagram illustrating still another example relationship between the distance from a predetermined region to a plane object and the brightness of a shaded arca.
FIG. 6D is a diagram illustrating yet still another example relationship between the distance from a predetermined region to a plane object and the brightness of a shaded area.
FIG. 7A is a diagram illustrating yet still further another example relationship between the distance from a predetermined region to a plane object and the brightness of a shaded area.
FIG. 7B is a diagram illustrating yet still further another example relationship between the distance from a predetermined region to a plane object and the brightness of a shaded area.
FIG. 7C is a diagram illustrating yet still further another example relationship between the distance from a predetermined region to a plane object and the brightness of a shaded area.
FIG. 7D is a diagram illustrating yet still further another example relationship between the distance from a predetermined region to a plane object and the brightness of a shaded area.
FIG. 8 is a flowchart for explaining an image generation process.
FIG. 9 is a diagram illustrating a character object, a plane object, a light source, and a shaded arca.
FIG. 10 is another diagram illustrating a character object, a plane object, a light source, and a shaded area.
FIG. 11A is a diagram illustrating a shade on a predetermined region only.
FIG. 11B is another diagram illustrating a shade on a predetermined region only.

### Explanation of Reference Numerals

- 100: information processing apparatus
- 101: CPU
- 102: ROM
- 103: RAM
- 104: interface
- 105: controller
- 106: external memory
- 107: DVD-ROM drive
- 108: image processor
- 109: sound processor
- 110: NIC
- 200: image generating apparatus
- 201: storage unit
- 202: calculating unit
- 203: determining unit
- 204: changing unit
- 205: generating unit
- 251: character object information
- 252: plane object information
- 253: light source information
- 301: character object
- 302: plane object
- 303: light source
- 304: shade
- 305: shaded region
- 501: predetermined region
- 502: predetermined region shade

### Best Mode for Carrying out the Invention

Embodiments of the present invention are explained below. Hereinafter, for the ease of understanding, embodiments for achieving the present invention are explained using an information processing apparatus for games. The embodiments below are not to limit the scope of the present invention, but described for the sake of explanation. By replacing all or part of the components thereof by their equivalents, one of ordinary skill in the art can adopt an embodiment other than the foregoing embodiments, but such an embodiment are still within the scope of the present invention.

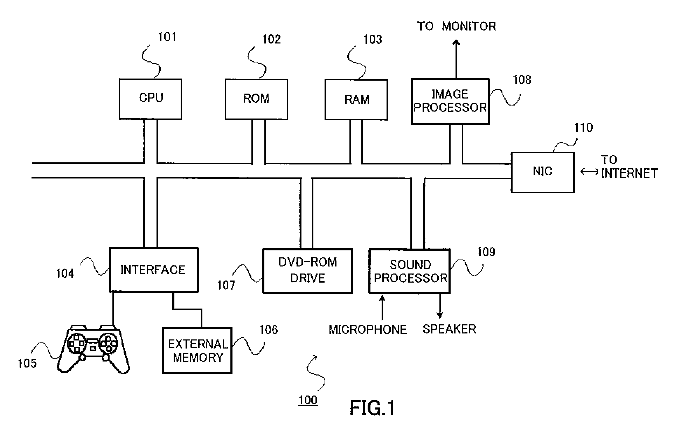

FIG. 1 is a schematic diagram illustrating a general configuration of a typical information processing apparatus 100 that performs functions of an image generating apparatus according to the present invention by executing programs. Explanations are made in the text to follow with reference to the drawings.

The information processing apparatus 100 includes a CPU (Central Processing Unit) 101, a ROM (Read Only Memory) 102, a RAM (Random Access Memory) 103, an interface 104, a controller 105, an external memory 106, a DVD-ROM (Digital Versatile Disk - Read Only Memory) drive 107, an image processor 108, a sound processor 109, and an NIC (Network Interface Card) 110.

By inserting a DVD-ROM storing the program and data of a game into the DVD-ROM drive 107 and turning on the power of the information processing apparatus 100, the program is launched, and an image generating apparatus according to this embodiment is achieved.

The CPU 101 controls overall operation of the information processing apparatus 100 and is connected with other components for exchanging control signals and data. The CPU 101 uses an Arithmetic Logic Unit (ALU) (not shown) to perform four arithmetic operations (addition, subtraction, multiplication, and division), logical operations (logical addition, logical multiplication, logical NOT, etc.), and bit operations (bitwise OR, bitwise AND, bit inversion, bit shift, bit rotation, etc.) in a fast-access storage area called a register (not shown). The CPU 101 may be designed to, either by itself or with assistance of a coprocessor, perform saturate calculations (four arithmetic operations for multimedia processing), vector calculations (trigonometric calculations, etc.), and the like at high speeds.

In the ROM 102, an Initial Program Loader (IPL), which is executed immediately after the power is turned on, is recorded. Upon execution of the IPL, the program recorded in a DVD-ROM is read out to the RAM 103 for the CPU 101 to launch execution. Programs and data of the operating system required for overall control and operation of the information processing apparatus 100 are also recorded in the ROM 102.

The RAM 103 is used for temporary storage of data and programs. The RAM 103 holds data and programs read out from the DVD-ROM as well as other data needed for the progress of the game and chat communications. The CPU 101 sets a variable area in the RAM 103 and sends a value stored in the storage area directly to the ALU for operations to be performed thereby. Also, the CPU 101 stores temporarily in the register a value stored in the RAM 103, performs an operation in the register, and writes the operation results back to the memory.

The controller 105, which is connected via the interface 104, receives operation inputs from the user for executing a game, such as a dance or succor game.

The external memory 106 is detachably connected via the interface 104. Data rewritably recorded in the external memory 106 include data on the player performance in the game, etc. (past results, etc.), the progress of the game, and logs (records) of chat communications for a network match-up. The user can appropriately record such data in the external memory 106 by inputting instructions via the controller 105.

In a DVD-ROM to be mounted on the DVD-ROM drive 107, a program for executing the game as well as image and sound data that accompany therewith are recorded. Under control of the CPU 101, the DVD-ROM drive 107 reads out, from the DVD-ROM mounted thereon, required programs and data. The above programs and data are stored temporarily in the RAM 103, etc.

The image processor 108, upon processing of data read out from the DVD-ROM by an image operation processor (not shown) comprised in the image processor 108 or the CPU 101, records the data in a frame memory (not shown) comprised in the image processor 108. The image information recorded in the frame memory is converted into video signals at a predetermined synchronization timing and output to a monitor (not shown) connected to the image processor 108. Many kinds of image display are thereby enabled.

The image operation processor can perform overlay calculation for 2D images, transparent operations (alpha blending, etc.), and many kinds of saturate calculation at high speeds.

When a virtual space is 3D, it is also possible to perform a high-speed operation to acquire a rendering image from polygon information, which is arranged within the virtual 3D space and to which various kinds of texture information are added. In such an operation, the Z buffer method is used for rendering polygon information to acquire a rendering image in which a polygon in a virtual space can be seen from a predetermined viewpoint in a predetermined line of sight direction.

Further, by cooperation of the CPU 101 and the image operation processor, a string can be drawn as a 2D image in the frame memory or on each polygon surface according to font information defining text shapes.

' By storing information, such as game images, in a DVD and expanding such information in a frame memory, the situation of the game can be displayed on the screen

The sound processor 109 converts, into an analog sound signal, sound data read out from the DVD-ROM and outputs the sound signal from a speaker (not shown) connected thereto. Under control of the CPU 101, the sound processor 109 generates sound effects and music data to be generated during the game and outputs sounds corresponding thereto from the speaker.

When the sound data recorded in the DVD-ROM is MIDI data, the sound processor 109 refers to the sound source data included in the sound data and converts the MIDI data into PCM data. When the sound data is compressed sound data in the Adaptive Differential Pulse Code Modulation (ADPCM) format, the Ogg Vorbis format, or the like, the sound processor 109 decompresses the data and converts it into PCM data. The PCM data is, upon (digital/analog) D/A conversion at a timing corresponding to the sampling frequency of the PCM data, output to the speaker, thereby enabling sound output.

The NIC 110 is used for connecting the information processing apparatus 100 to a computer communication network (not shown), such as the Internet. The NIC 110 comprises ones compliant with the 10 BASE-T/100 BASE-T standard which is used to configure a Local Area Network (LAN), an analog modem for Internet connection via a telephone circuit, an Integrated Services Digital Network (ISDN) modem, an Asymmetric Digital Subscriber Line (ADSL) modem, a cable modem for Internet connection via a cable television circuit and the like, and an interface (not shown) which intervenes between these modems and the CPU 101.

In addition, the information processing apparatus 100 may use a large-capacity external storage device, such as a hard disk, so that the information processing apparatus 100 has the functions of the ROM 102, the RAM 103, the external memory 106, a DVD-ROM loaded onto the DVD-ROM drive 107, or the like.

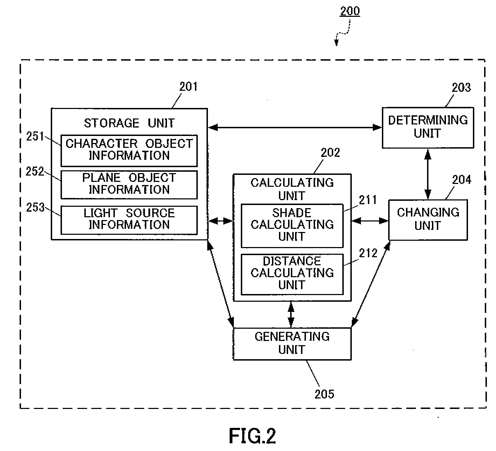

Next, a functional configuration of an image generating apparatus 200 according to this embodiment is explained. As shown in FIG. 2, the image generating apparatus 200 comprises a storage unit 201, a calculating unit 202, a determining unit 203, a changing unit 204, and a generating unit 205.

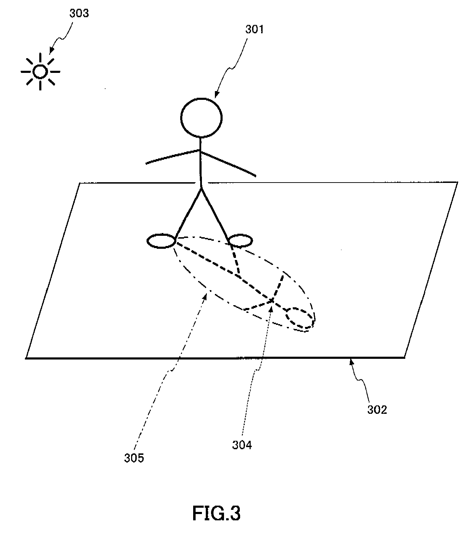

As shown in FIG. 3, a character object 301 and a plane object 302 are placed in a virtual space. This figure shows a view seen from a virtual camera (not shown) placed in this virtual space. For example, in a dance game, the character object 301 is an object representing an instructor teaching the player (the user of the image generating apparatus 200) how to dance. The plane object 302 is an object representing a floor or stage on which the instructor is standing. Other objects may be placed in a virtual space.

A light source 303 is also plased in this virtual space. When a light is irradiated from the light source 303 to the character object 301, the plane object 302, and the like, a shade 304 of the character object 301 from the light source 303, which is produced by a light from the light source 303, is reflected on the shaded region 305 on the surface of the plane object 302. For example, the light source 303 is the sun or lighting equipment in a virtual space.

For the ease of understanding of the present invention, the light source 303 is a point light source in this embodiment. However, the light source 303 may be a linear light source, a plane light source, or a light source with an arbitrary three-dimensional shape.

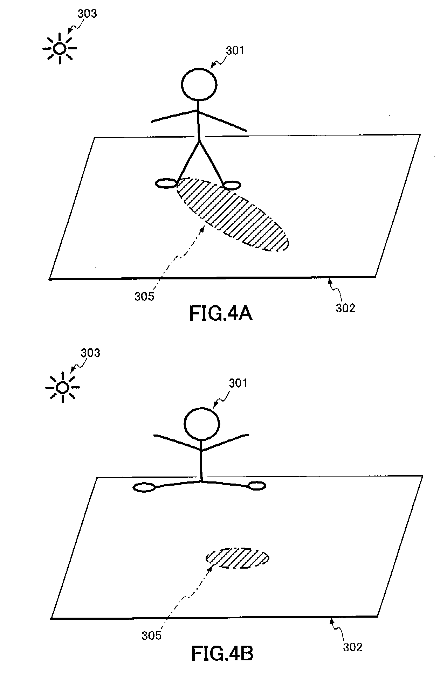

The CPU 101 changes the hue, saturation, and brightness of the shaded region 305. The shaded region 305 may be changed into the shade 304 by changing the color of the shaded region 305 to, for example, black or gray or making the shaded region 305 relatively darker. For example, FIG. 4A is a diagram illustrating an example situation where the character object 301 is in contact with the plane object 302. FIG. 4B is a diagram illustrating an example situation where the character object 301 is not in contact with (is separated from) the plane object 302. The CPU 101 sets the shape of the shaded region 305 to an ellipse. Then the CPU 101 moves, enlarges, minimizes, rotates the ellipse, and moves the position thereof based on the position and shape of the character object 301, the position and shape of the plane object 302, and the position of the light source 303. By changing the shaded region 305 into the shade 304, the image generating apparatus 200 is exempt from performing accurate light source calculation. As calculation of the position and shape of the shade 304 is not needed, the below-mentioned process for image generation can be simplified. It is a matter of course that the shape is not limited to an ellipse and is optional.

The explanation below assumes a situation where the image generating apparatus 200 executes a dance game in which the player is taught the choreography of a dance and images containing a dance instructor are generated and displayed according to the progress of the game. However, this is simply another embodiment. The present invention can be applied to display of an optional character image appearing in a game other than a dance game. Also, the present invention is applicable not only to games, but also to generating various images, such as animation and movie images.

The storage unit 201 stores (A) character object information 251 indicating the position and shape of the character object 301, (B) plane object information 252 indicating the position and shape of the plane object 302, and (C) light source information 253 indicating the position of the light source 303. The CPU 101 reads out, from a DVD-ROM mounted on a DVD-ROM drive, the initial positions and shapes of the character object 301 and the plane object 302 as well as the initial position of the light source 303. Then the CPU 101 stores these initial positions and shapes in the RAM 103. By calculating these positions and shapes during the progress of the game, the CPU 101 updates the character object information 251, the plane object information 252, and the light source information 253. The CPU 101, the RAM 103, and the DVD-ROM drive 107 cooperate to act as the storage unit 201.

The positions of the character object 301, the plane object 302, and the light source 303 are each represented using a coordinate system with one radius and two deviation angles. In this coordinate system, the coordinate value (r,θ,ϕ) is a representative value of each object. For example, the coordinate value of the centroid point of the character object 301 is a coordinate value of the position of the representative point of the character object 301. The coordinate system is not limited to this polar coordinate system. For example, an orthogonal coordinate system of three axes orthogonal to each other may be used. It is also possible to adopt an configuration for performing coordinate calculation by separately setting a global coordinate system (world coordinate system) for representing the entire virtual space and a local coordinate system (body coordinate system) for each object.

The shapes of the character object 301 and the plane object 302 are, by dividing the surfaces of these objects into small polygons (primitives) of multi-angular shapes (typically, triangle or quadrangle), represented as numerical data.

For example, when the plane object 302 is a flat plane, the position of the plane object 302 can be defined using at least three arbitrary coordinate values on the plane object 302. The shape of the plane object 302 is not limited to a flat one, and it can be a bent one with an arbitrary shape.

The calculating unit 202 comprises a shade calculating unit 211 and a distance calculating unit 212. The shade calculating unit 211 calculates the position of the shaded region 305 projected onto the plane object 302, on which the shade 304 of the character object 301 is produced by a light irradiated from the light source 303. Under control of the CPU 101, the image processor 108 calculates the position of the shaded region 305 projected onto the plane object 302 based on the character object information 251, the plane object information 252, and the light source information 253. Then the image processor 108 stores the calculated result in the RAM 103. Also, the distance calculating unit 212 calculates a distance δ between the character object 301 and the plane object 302 and store the calculated result in the RAM 103. The distance δ will be described in detail later. The CPU 101, the RAM 103, and the image processor 108 cooperate to act as the calculating unit 202.

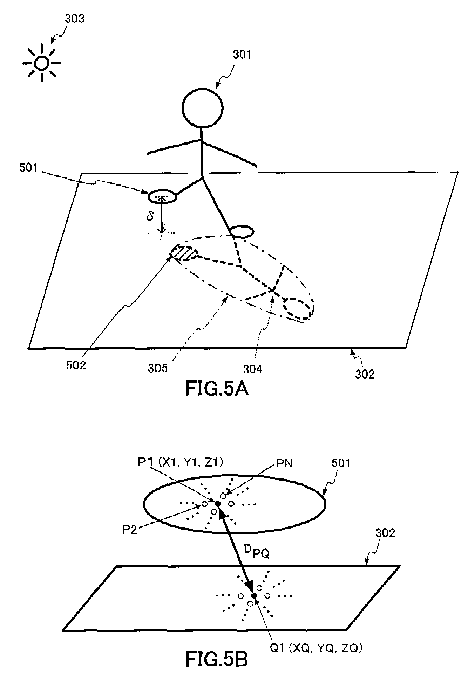

FIG. 5A is an example diagram illustrating a situation where the predetermined region 501, which is defined in advance in the character object 301, is not in contact with the plane object 302. In this example diagram, the character object 301, which is shaped like a human, is raising one foot. The predetermined region 501 is a portion corresponding to a sole (shoe bottom) of the character object 301. FIG. 3, which is described above, is an example diagram illustrating a situation where the predetermined region 501 within the character object 301 is in contact with the plane object 302.

The shade calculating unit 211 may calculate, instead of the position of the shaded region 305, the position and shape of the shade 304 of the character object 301, which is projected onto the plane object 302. Then the shade calculating unit 211 may calculate the position of the shade 502 (portion in FIG. 5A shaded with oblique lines) of the predetermined region 501 in the shaded region 305. In this way, the shape of a shadow is accurately represented, and realistic images can be generated.

In this embodiment, the distance calculating unit 212 calculates the distance between the predetermined region 501 and the plane object 302 as the distance δ between the character object 301 and the plane object 302.

The predetermined region 501 may exist at several locations of one character object 301. For example, the sole of one foot is the predetermined region 501 in FIG. 5A, but the soles of the two feet may be the predetermined regions 501. The predetermined region 501 is a region set in advance on the surface of the character object 301. An arbitrary region (e.g., the palm of a hand, etc.) on the surface of the character object 301 may be set as the predetermined region 501.

The determining unit 203 determines whether the character object 301 is in contact with the plane object 302 based on the positions and shapes of the character object 301 and the plane object 302 stored in the storage unit 201. The CPU 101, the RAM 103, and the image processor 108 cooperate to act as the determining unit 203.

More specifically, the determining unit 203 determines whether the character object 301 is in contact with the plane object 302 based on whether the predetermined region 501 of the character object 301 is in contact with the plane object 302.

Here, as shown in FIG. 5B, the determining unit 203 determines that a point P1 is "in contact" with the plane object 302 if the coordinate value of the point P1 on the predetermined region 501 agrees with the coordinate value of a point Q1 on the plane object 302. An arbitrary point on the predetermined region 501 may be selected as the point P1, and an arbitrary point on a plane object may be selected as the point Q1. Even in case of disagreement, when the distance D_{PQ} between the point P1 and the point Q1 is smaller than or equal to a predetermined value, the point P1 may be seen to be in contact. More specifically, the point P1 is in contact with the plane object 302 when the coordinate value of the point P1 on the predetermined region 501 agrees with the point Q1 on the plane object 302 or the distance between the point P1 and the point Q1 is smaller than or equal to a predetermined value.

Also, when at least one of N predetermined points P1, P2, ..., PN (N is an integer greater than or equal to zero) on the predetermined region 501 is in contact with the plane object 302, the determining unit 203 determines that the predetermined region 501 and the plane object 302 are in contact with each other. Conversely, when all of the N predetermined points P1, P2, ..., PN on the predetermined region 501 are not in contact with the plane object 302, the determining unit 203 determines that the predetermined region 501 and the plane object 302 are not in contact with each other.

For example, the character object 301 is a dance instructor, and the plane object 301 is the floor on which the instructor is standing. Also, the predetermined region 501 is a portion of the whole surface of the character object 301 corresponding to the sole (shoe bottom) of the instructor. The determining unit 203 determines that the character object 301 is in contact with the plane object 302 as long as a portion of the predetermined region 501 is in contact with the plane object 302. As illustrated in FIG. 4B, when the instructor has jumped and is in the air, the determining unit 203 determines that the instructor (character object 301) is not in contact with the floor (plane object 302). Also, when the instructor lands on the floor with toes only, the determining unit 203 determines that the instructor is in contact with the floor.

Alternatively, the determining unit 203 may determine that the predetermined region 501 and the plane object 302 are in contact with each other when all of the N points on the predetermined region 501 are in contact with the plane object 302. The determining unit 203 may also determine that the predetermined region 501 and plane object 302 are not in contact with each other when all of them are not in contact.

For example, the determining unit 203 may be configured to determine that the character object 301 is not in contact with (separated from) the plane object 302 when one portion of the predetermined region 501 is not in contact with the plane object 302 - i.e., the whole predetermined region 501 is not in contact with the plane object 302. In this case, for example, when the instructor has jumped and is in the air, the determining unit 203 determines that the instructor is not in contact with the floor. Also, when the instructor lands on the floor with toes only, the determining unit 203 determines that the instructor is not in contact with the floor. Moreover when the instructor lands on the floor with the whole sole, the determining unit 203 determines that the instructor is in contact with the floor.

Furthermore, the determining unit 203 may determine that the predetermined region 501 is in contact with the plane object 302 when the rate of N points on the predetermined region 501 in contact with the plane object 302 is greater than a predetermined rate (e.g., greater than or equal to 50%) of all the N points. Otherwise, the determining unit 203 may determine that the predetermined region 501 is not in contact with the plane object 302. In addition, the determining unit 203 may determine that the predetermined region 501 is in contact with the plane object 302, when the area of the predetermined region 501 in contact with the plane object 302 is greater than a predetermined value. When not in contact, the determining unit 203 may determine that the predetermined region 501 is not in contact with the plane object 302.

Any of the foregoing determining methods may be adopted. In this embodiment, the determining unit 203 determines that the character object 301 is in contact with the plane object 302 as long as a portion of the predetermined region 501 is in contact with the plane object 302.

When setting a plurality of the predetermined regions 501 on the character object 301, whether at least one of the predetermined regions 501 is in contact with the plane object 302 may be determined. Whether all the predetermined regions 501 are in contact with the plane object 302 may be determined as well.

When the determining unit 203 has determined that the character object 301 is not in contact with the plane object 302, the changing unit 204 changes at least one of the hue, saturation, and brightness of the shaded region 305 calculated by the shade calculating unit 211. This change is made according to the distance δ between the character object 301 and the plane object 302 calculated by the distance calculating unit 212. The CPU 101, the RAM 103, and the image processor 108 cooperate to act as the changing unit 204.

The distance δ between the character object 301 and the plane object 302 is, as illustrated in FIG. 5A, the length of a vertical line originating from a predetermined representative point on the predetermined region 501 to the plane represented by the plane object 302. Typically, the representative point is a centroid point of the predetermined region 501. The distance δ may be the length of a vertical line originating from the nearest point on the predetermined region 501, which is the point nearest to the plane object 302 of all the points within the bounds of the predetermined region 501, to the plane represented by the plane object 302.

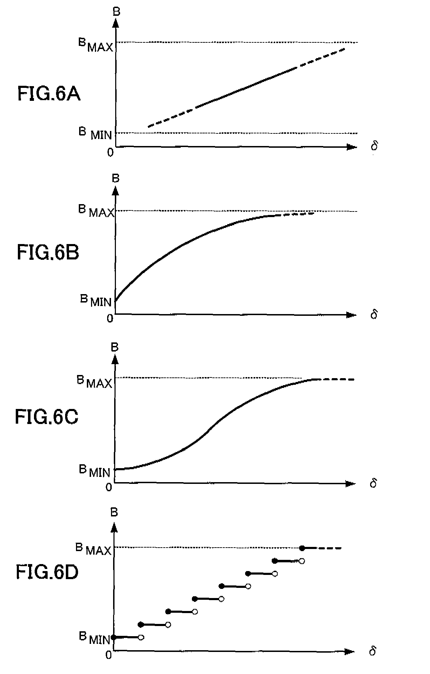

For example, the changing unit 204 increases at least one of the hue, saturation, and brightness of the shaded region 305 monotonously with respect to the distance δ between the character object 301 and the plane object 302. FIGS. 6A to 6D are diagrams illustrating how the brightness B, which is set as a variable, relates to the distance δ between the character object 301 and the plane object 302, The value of the brightness is greater than or equal to B_{MIN}% and smaller than or equal to B_{MAX}%. The minimum value B_{MIN} and the maximum value B_{MAX} may be arbitrarily set so that B_{MIN} and B_{MAX} are greater than or equal to 0% and smaller than or equal to 100%, respectively, and that B_{MIN} is smaller than B_{MAX}.

In FIG. 6A, the changing unit 204 increases the brightness of the shade 502 of the predetermined region 501 proportionally with respect to the distance δ between the character object 301 and the plane object 302. After the brightness reaches the maximum value B_{MAX} at a certain distance (not shown), the brightness is constant at distances greater than that distance.
In FIG. 6B, the changing unit 204 decreases the rate of increase in the brightness with an increase in the distance δ. The brightness finally converges to the maximum value B_{MAX}.
In FIG. 6C, the changing unit 204 changes the rate of increase in the brightness, which is a real value greater than or equal to 0.
In FIG. 6D, the changing unit 204 uses a step function to change the brightness. The overall trend should be that the brightness increases as the distance δ increases. There may be a section where the brightness is constant (the rate of increase is zero).

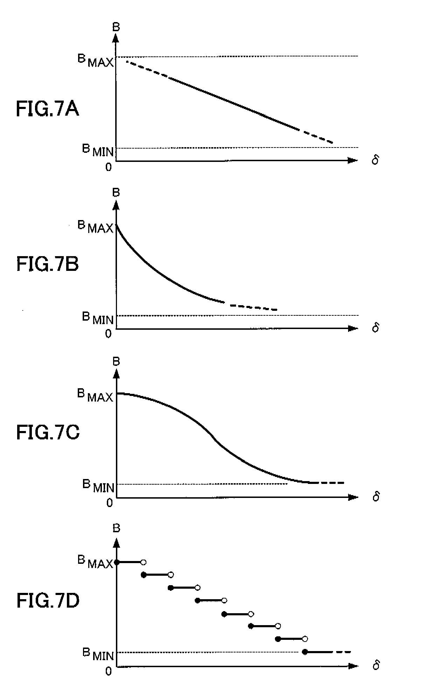

For example, the changing unit 204 increases at least one of the hue, saturation, and brightness of the shaded region 305 monotonously with respect to the distance δ between the character object 301 and the plane object 302. FIG. 7A to FIG. 7D are diagrams illustrating how the brightness B, which is set as a variable, relates to the distance δ between the character object 301 and the plane object 302.

In FIG. 7A, the changing unit 204 decreases the brightness of the shade 502 of the predetermined region 501 proportionally with respect to the distance δ between the character object 301 and the plane object 302. After the brightness reaches the minimum value B_{MIN} at a certain distance (not shown), the brightness is constant at distances greater than that distance.
In FIG. 7B, the changing unit 204 decreases the rate of decrease in the brightness with an increase in the distance δ. The brightness finally converges to the minimum value B_{MIN}.
In FIG. 7C, the changing unit 204 changes the rate of decrease in the brightness, which is a real value greater than or equal to 0.
In FIG. 7D, the changing unit 204 uses a step function to change the brightness. The overall trend should be that the brightness decreases as the distance δ increases. There may be a section where the brightness is constant (the rate of decrease is zero).

The changing unit 204 can use each of the functions illustrated in FIG. 6A to FIG. 6D and FIG. 7A to FIG. 7D according to various numerical parameters, such as the progress of the game, the type of game, the level of difficulty, and the results of the player.

For example, the image generating apparatus further comprises a playing unit, which reads out and plays music data stored in advance in a DVD-ROM or the like and executes a music game in which the player dances along with or plays music. The character object 301 makes poses and dances in tune with the played music. In this kind of music game, such as a dance game, the changing unit 204 uses the abovementioned functions according to the tempo of a song being played by the playing unit. The instructor (character object 301) is expected to quickly move his/her feet (predetermined region 501) for fast-tempo songs and to slowly move them for slow-tempo songs. For quick movement of feet, the player needs to make a decision instantly since the player put his/her on the floor and take it off the floor frequently. For fast-tempo songs, as illustrated in FIG. 7A to FIG. 7D, the shadow is changed somewhat significantly for a small distance between the feet and the floor. For slow-tempo songs, as illustrated in FIG. 6A to FIG. 6D, the shadow is changed somewhat significantly for a large distance therebetween. Which method of the ones illustrated in FIG. 7A to FIG. 7D is to be used may be determined based on how fast the tempo is. Which method of the ones illustrated in FIG. 6A to FIG. 6D is to be used may be determined based on how slow the tempo is. Such determination may be made based not only on the tempo of the song, but also on the category of music - e.g., pop, jazz, and classic, - and on the tune, melody, rhythm, and beat of the song.

For example, the functions arc used according to the operation history of the player. When the player is operating as instructed by the instructor (i.e., the results are good), the changing unit 204, as illustrated in FIG. 7A to FIG. 7D, makes a minimal change as the feet is close to the floor and makes a significant change as the feet is far therefrom. Conversely, when the player is not operating as instructed by the instructor (i.e., the results are not good), the changing unit 204, as illustrated in FIG. 7A to FIG. 7D, makes a significant change for a small distance between the feet and the floor and makes a minimal change for a large distance therebetween. The changing unit 204 use the functions illustrated in FIG. 6A to FIG. 6D and FIG. 7A to FIG. 7D according to the scores earned by the player, how many time the player has played the game, the play duration, the number of wins and losses, the ratio of wins to losses, the head-to-head records, etc.

For example, the monotonous decreases illustrated in FIG. 7A to FIG. 7D are made for a player whose operation history implies that it is appropriate to intensively teach the timing of raising a foot from the floor. Also, the monotonous increases illustrated in FIG. 6A to FIG. 6D are made for a player whose operation history implies that it is appropriate to intensively teach how high from the floor a foot should be raised. In such cases, the changing unit 204 makes a monotonous increase when the score earned by the player for the timing of raising a foot from the floor is higher than the reference score. A monotonous decrease is made for a score lower than the reference point. Also, the changing unit 204 makes a monotonous decrease when the score earned by the player for the timing of maintaining a foot at the highest height from the floor is higher than the reference score. A monotonous increase is made for a score lower than the reference point.

When the changing unit 204 changes the brightness of the shaded region 305, the shade of the instructor turns brighter and darker according to the distance D. The higher the instructor (character object 301) jumps (i.e., the longer the distance δ), the brighter the instructor shade (shaded region 305) turns. The player can easily see how far a foot of the instructor is separated from the floor based on differences in the brightness of the shade. Likewise, by changing the hue and saturation according to the distance δ, how far a foot of the instructor is separated from the floor can be seen based on differences in the tone and colorfulness of the shade, etc.

The changing unit 204 may change, based on the distance δ, the hue, saturation, and brightness of the shade 502 of the predetermined region 501 of the shaded region 305, instead of those of the whole shaded region 305. For example, when each of the soles of the instructor is the predetermined region 501, the changing unit 204 changes the hue, saturation, and brightness of each of the soles. The player can easily see how far each foot is separated from the floor.

The generating unit 205 generates an image containing the character object 301 and the plane object 302 based on the position and shape of the character object 301, the position and shape of the plane object 302, and the position of the light source 303. This image also contains the image of the shade (shade region 305) of the character object 301 projected onto the plane object 302 by the light source 303. The generating unit 205 draws the shaded region 305 on the generated image according to the hue, saturation, and brightness changed by changing unit 204. Under control of the CPU 101, the image processor 108 attaches, for image generation, texture data for a predetermined character object on the surface of the character object 301 and texture data for a predetermined plane object on the surface of the plane object 302. Also, the shaded region 305 is set at a position calculated by the calculating unit 202, and the hue, saturation, and brightness of the shaded region 305 of the generated image are changed. The above types of texture data are in advance stored in a DVD-ROM, etc. The CPU 101, the RAM 103, and the image processor 108 cooperate to act as the generating unit 205.

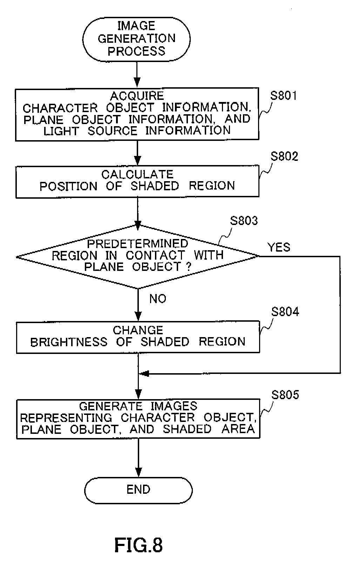

The flowchart in FIG. 8 is used to explain the image generation process performed in cooperation by the aforementioned units. In the explanation below, for example, the character object 301 is a dance instructor, and the plane object 302 is a floor. Also, one sole of the instructor is the predetermined region 501. The instructor dances on the floor, and a foot thereof eventually is raised from the floor. The image generating apparatus 200 generates an image by changing the brightness of the instructor shade (shaded region 305) based on the distance between the floor and the sole. As mentioned above, the shade calculating unit 211 can calculate the shade 304 by performing specific light source calculation based on the position and shape of the character object 301, the position and shape of the plane object 302, and the position of the light source 303. In the explanation below, the shade calculating unit 211 is assumed to calculate the shaded region 305 as an approximate region where the shade 304 is to appear and regards the calculated shaded region 305 as the shade 304.

The calculating unit 202 first reads out and acquire the character object information 251, the plane object information 252, and the light source information 253 from the storage unit 201 (step S801). The character object information 251 indicates the position and shape of the character object 301. The plane object information 252 indicates the position and shape of the plane object 302. The light source information 253 indicates the position of the light source 303.

The shade calculating unit 211 calculates the position of the shaded region 305 based on the acquired character object information 251, the acquired plane object 252, and the acquired light source information 253 (step S802).

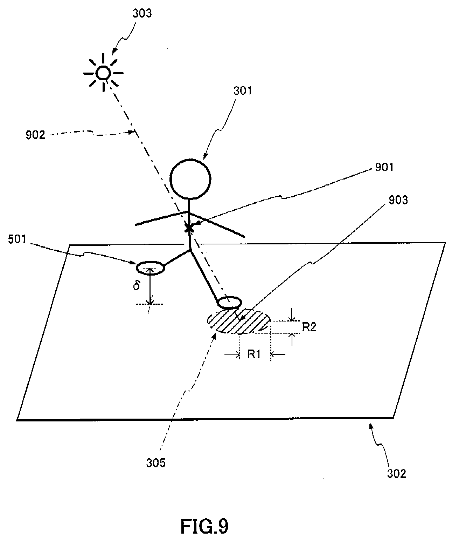

For example, as illustrated in FIG. 9, the shade calculating unit 211 performs calculation based on the assumption that the shape of the shaded region 305 is an ellipse. In the calculation, an intersection 903 of a line 902 with the plane object 302 is set as a center (an intersection of the long and short axes) of the ellipse representing the shaded region 305. Here, the line 902 is a line that connects the position of the light source 303 and the position of a representative point 901 of the character object 301. The representative point 901 is, for example, a predetermined position of the character object 301, such as a centroid point, head, or belly.

The shade calculating unit 211 may decrease radii R1 and R2 of the ellipse representing the shaded region 305 as the distance δ increases. The distance δ is the distance between the character object 301 and the plane object 302 calculated by the distance calculating unit 212. Alternatively, the distance calculating unit 212 may calculate the distance between the representative point 901 and the plane object 302, and the shade calculating unit 211 may decrease the radii R1 and R2 as the calculated distance therebetween increases.

The determining unit 203 determines whether the character object 301 is in contact with the plane object 302 based on the character object information 251 and the plane object information 252 (step S803). More specifically, for example, as long as a portion of the predetermined region 501, which has been set in advance, is in contact with the plane object 302, the character object 301 is determined to be in contact with the plane object 302. When the predetermined region 501 is not in contact with the plane object 302, the character object 301 is determined not to be in contact with the plane object 302.

Upon determination that the character object 301 is not in contact with the plane object 302 (step S803; NO), the changing unit 204 changes the brightness of the shaded region 305 according to the distance δ between the character object 301 and the plane object 302 (step S804). For example, the changing unit 204 increases the brightness of the shaded region 305 as the distance δ between the character object 301 and the plane object 302 increases. In other words, the changing unit 204 increases the brightness of the instructor shadow as the distance between a foot of the instructor and the floor increases. It is a matter of course that the hue and/or saturation may be changed instead of or in addition to the brightness. The brightness of the shaded region 305 may be decreased as the distance δ increases.

Upon determination that the character object 301 is in contact with the plane object 302 (step S803; YES), the changing unit 204 sets the brightness to a predetermined value instead of changing it. For example, the changing unit 204 changes the brightness in the range between the minimum value B_{MIN} and the maximum value B_{MAX}. When the character object 301 is in contact with the plane object 302, the brightness is set to the minimum value B_{MIN}, When not in contact, the brightness is gradually increased from the minimum value B_{MIN} according to the distance δ within an extent of not exceeding the maximum value B_{MAX}.

Also, the generating unit 205 generates an image representing the character object 301, the plane object 302, and the shaded region 305 (step S805).

The image thus generated is displayed on the monitor. More specifically, the CPU 101 controls the image processor 108 so that the image generated by the generating unit 205 is displayed on the monitor. The player can see an image containing the character object 301, the plane object 302, and the shade of the character object 301. At least one of the hue, saturation, and brightness of the shade of the character object 301 changes based on the distance between the character object 301 and the plane object 302. By looking at the change to the shade, the player can immediately see whether they are separated and, if separated, the distance therebetween. The positional relationship between objects can be readily understood.

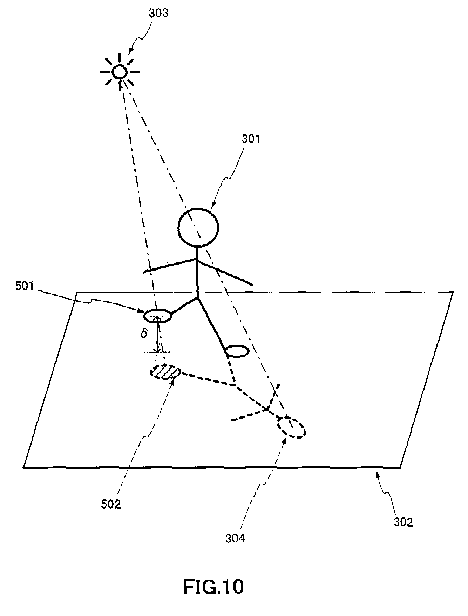

As illustrated in FIG. 10, instead of calculating the position and shape of the shaded region 305, the shade calculating unit 211 may perform light source calculation to calculate the position and shape of the shade 304 based on the positions and shapes of objects. The shade calculating unit 211 may change at least one of the hue, saturation, and brightness of the shade 502 of the predetermined region 501 in the calculated shade 304 according to the distance δ between the character object 301 and the plane object 302. Instead of calculating the position and shape of the shade 305, which roughly represents the shape of the shade, specific light source calculation can be performed to acquire the position and shape of the shade 304. The resulting image is a more realistic one.

As explained above, according to this embodiment, the positional relationship between the character object 301 and the plane object 302 can be clearly represented. For example, by changing the representation of the shade of the character object 301, whether the character object 301 is in contact with the plane object 302 is further clarified. As the distance between the character object 301 and the plane object 302 increases, a decrease in the distance can be more clearly represented to the user by increasing (or decreasing) the hue, saturation, and brightness of the shade and showing the user the amount of increase (decrease) to the shade. When displaying an image with a depth in a virtual three-dimensional space, an area where objects possibly contact each other may not be seen due to coverage of the area by one or both of these objects or by another nearby object. Even in this kind of situation, whether the objects are in contact and how close they are to each other can be clearly and easily represented by making changes to the shadow.

The shade 304 and the shaded region 305 do not need to be objects. In this embodiment, the shade calculating unit 211 calculates the position (and shape) of the shaded region 305 of the whole region of the plane object 302. Here, the shaded region 305 is a shade of the character object 301 produced by a light from the light source 303. The changing unit 204 changes at least one of the hue, saturation, and brightness, and the generating unit 205 attaches predetermined texture to the plane object 302. Thereafter, an image containing the shaded region 305, which has been changed by the changing unit 204, is generated. The image generating apparatus 200 changes the hue, saturation, and brightness of the texture to be attached to the plane object 302. It is a matter of course that the shade 304 or the shaded region 305 may be an object, and the hue, saturation, and brightness may be changed after attaching predetermined texture for a shade.

In this embodiment, explanations have been made assuming a situation where the instructor dances on the floor in a virtual space. However, the present invention is applicable to various other situations.

For example, in a game to compete for jump height, the image generating apparatus 200 changes the brightness of the shadow of a player character so that it increases as the jump height of the player character from the ground increases. The player having looked at the change in the shadow brightness can easily know how high the jump was. In this case, the player character is the character object 301, and the ground is the plane object 302. As mentioned above, by generating an image in which a shade is changed, the image generating apparatus 200 can inform the user of the height and position without displaying the gauge, numerical value, or the like indicating the height or position. The volume of information conveyed to the user can be increased while maintaining the simplicity of the image.

For example, in a racing game, the body of a racing car is the character object 301, and the side wall of the race course is the plane object 302. The image generating apparatus 200 generates a video shot by a virtual camera from the rear of the car body. In the video shot from the rear thereof, the tip of the front wing of the car body cannot be easily seen. In this situation, the image generating apparatus 200 changes the brightness of the shadow of the car body so that it increases (the shadow turns brighter) as the car body nears the side wall. The player operating the racing car can easily find out how close the front wing of the racing car is to the side wall, whether the racing car has contacted with side wall, and the like, simply by looking at changes in the brightness of the shadow.

For example, the present invention is applicable in a match-up game as means for informing the player that the opponent is nearby when the player character approaches an opponent character. As the distance between the player character and the opponent character decreases, the brightness of the shadow of the player character increases. In this case, the player character is the character object 301, and a surface of polygons, which constitute a specific portion (e.g., a part of the face) of all the polygons (e.g., the entire face) constituting the enemy character, is the plane object 302. The present invention is also applicable as means for informing the user that arbitrary objects are close to each other before their eventual collision.

For example, the player character is the character object 301, and a transparent window glass is the plane object 302. A sense of the distance between the player character and the window glass cannot be easily provided by simply representing the shadow of the player character or the like. In this situation, the image generating apparatus 200 changes the brightness of the shadow of the player character so that it increases as the player character approaches the window glass. By looking at the change in the brightness of the shadow, the player can easily find out the proximity to the window glass, whether the hand of the player character has touched the glass window, etc.

The present invention is not limited to the above embodiments, and various modifications and applications are possible. Components of the above embodiments can be freely combined.

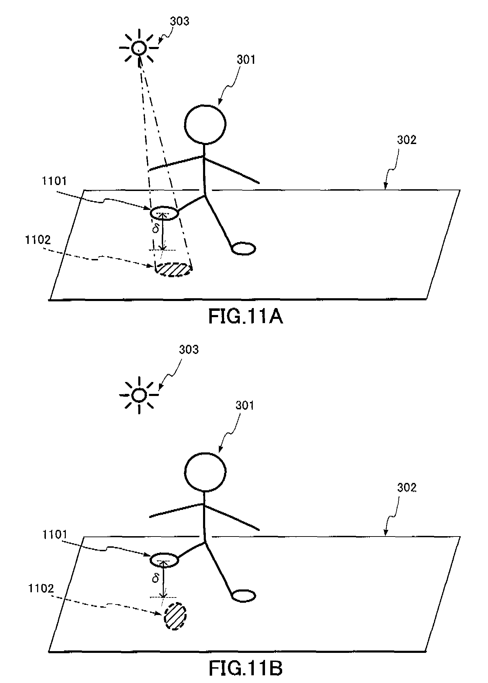

The shade calculating unit 211 may calculate only the shade 502 of the predetermined region 501. In other words, only the shadow of a foot of the instructor may be drawn instead of the entire shadow of the instructor. For example, as illustrated in FIG. 11A, the shade calculating unit 211 performs light source calculation based on the position and shape of the character object 301 and the position and shape of the plane object 302. Then the shade calculating unit 211 calculates the position and shape of the shaded region 1102, which corresponds to one portion (a foot of the instructor in the figure) 1101 of the whole character object 301. Also, the shade calculating unit 211 may change at least one of the hue, saturation, and brightness of the shaded region 1102, for which the foregoing calculation has been performed, depending on the distance δ between the character object 301 and the plane object 302. It is a matter of course that, even in this configuration, as illustrated in FIG. 11B, the position and size of the shaded region 1102 may be changed by setting the shaded region 1102 to a predetermined shape, instead of performing specific light source calculation. The shade calculating unit 211 should regard only a foot of the instructor as the character object 301 so as to calculate the position and shape of the shaded region 1102.

A program to cause the image generating apparatus 200 to act as a part or whole of the apparatus may be stored in a computer readable storage medium - such as a memory card, CD-ROM, DVD, or MO (Magnetic Optical) disk for distribution. The program may be installed in a separate computer to act as the aforementioned means or to perform the aforementioned process.

The program may be stored in a disk device comprised in a server apparatus on the Internet, etc. and, for example, superimposed on carrier waves, so that the program can be downloaded to the computer.

A priority right is claimed for the present application based on Japanese Patent Application No. 2007-253714. The contents of this base application are incorporated herein in their entirety.

### Industrial Applicability

As explained above, according to the present invention, an image generating apparatus, an image generating method, an information storage medium, and a program preferable for clearly representing the positional relationship between objects in a virtual space can be provided.

## Claims

1. An image generating apparatus comprising:
a storage unit (201), wherein the storage unit (201) stores a position of a character object, a position of a plane object, and a position of a light source in a virtual space;
a shade calculating unit (211), wherein the shade calculating unit (211) calculates a shade of the character object projected onto the plane object by the light source;
a distance calculating unit (212), wherein the distance calculating unit (212) calculates a distance between the character object and the plane object;
a changing unit (204), wherein the changing unit (204) changes the calculated shade according to the calculated distance between the character object and the plane object; and
a generating unit (205), wherein the generating unit (205) generates an image by drawing the character object, the plane object, and the shade thus changed.

2. The image generating apparatus according to claim 1,
wherein the storage unit (201) further stores a shape of the character object and a shape of the plane object;
the image generating apparatus further comprising a determining unit (203), wherein the determining unit (203) determines, based on the stored position and shape of the character object as well as on the stored position and shape of the plane object, whether the character object is separated from the plane object by more than a predetermined distance; and
wherein the changing unit (204) changes, upon determination by the determining unit (203) that the character object is separated from the plane object by more than the predetermined distance, the calculated shade according to the calculated distance between the character object and the plane object.

3. The image generating apparatus according to claim 2,
wherein the determining unit (203) determines that the character object is not in contact with the plane object when the character object is separated from the plane object by more than the predetermined distance and otherwise the determining unit (203) determines that the character object is in contact with the plane object; and
wherein the changing unit (204) changes the calculated shade based on the distance between the character object and the plane object upon determination by the determining unit (203) that the character object is not in contact with the plane object.

4. The image generating apparatus according to claim 3,
wherein the determining unit (203) determines whether the character object and the plane object are in contact with each other based on whether the plane object is in contact with a predetermined region on a surface of the character object; and
wherein the changing unit (204) regards a distance between the predetermined region and the plane object as the distance between the character object and the plane object.

5. The image generating apparatus according to claim 1,
wherein the changing unit (204) changes at least one of a hue, saturation, and brightness of the calculated shade.

6. The image generating apparatus according to claim 1, further comprising:
a playing unit (109), wherein the replaying unit (109) plays music,
wherein the changing unit (204) changes the calculated shade according to one of a type, tempo, tune, melody, rhythm, and beat of the music played by the playing unit (109).

7. The image generating apparatus according to claim 1,
wherein the changing unit (204) changes the calculated shade according to a score acquired by a player in a game executed by the image generating apparatus.

8. The image generating apparatus according to claim 5,
wherein the changing unit (204) monotonously increases a brightness of a portion of the calculated shade corresponding to the predetermined region with respect to the distance between the plane object and the predetermined region.

9. The image generating apparatus according to claim 5,
wherein the changing unit (204) monotonously decrease a brightness of a portion of the calculated shade corresponding to the predetermined region with respect to the distance between the plane object and the predetermined region.

10. An image generating method performed by an image generating apparatus comprising a storage unit (201), wherein a position of a character object, a position of a plane object, and a position of a light source in a virtual space are stored in the storage unit (201), the method comprising:
a shade calculating step of calculating a shade of the character object projected onto the plane object by the light source;
a distance calculating step of calculating a distance between the character object and the plane object;
a changing step of changing the calculated shade based on the distance between the character object and the plane object; and
a generating step of generating an image by drawing the character object, the plane object, and the changed shade.

11. A computer-readable information recording medium storing a program that causes a computer to act as:
a storage unit (201), wherein the storage unit (201) stores a position of a character object, a position of a plane object, and a position of a light source in a virtual space;
a shade calculating unit (211), wherein the shade calculating unit (211) calculates a shade of the character object projected onto the plane object by the light source;
a distance calculating unit (212), wherein the distance calculating unit (212) calculates a distance between the character object and the plane object;
a changing unit (204), wherein the changing unit (204) changes the calculated shade according to the calculated distance between the character object and the plane object; and
a generating unit (205), wherein the generating unit (205) generates an image by drawing the character object, the plane object, and the shade thus changed.

12. A program that causes a computer to act as:
a storage unit (201), wherein the storage unit (201) stores a position of a character object, a position of a plane object, and a position of a light source in a virtual space;
a shade calculating unit (211), wherein the shade calculating unit (211) calculates a shade of the character object projected onto the plane object by the light source;
a distance calculating unit (212), wherein the distance calculating unit (212) calculates a distance between the character object and the plane object;
a changing unit (204), wherein the changing unit (204) changes the calculated shade according to the calculated distance between the character object and the plane object; and
a generating unit (205), wherein the generating unit (205) generates an image by drawing the character object, the plane object, and the shade thus changed.
